# FASCICULE DE BREVET EUROPEEN

(11) **EP 1 419 936 B1**
(45) Date de publication et mention de la délivrance du brevet: **01.04.2009**
(21) Numéro de dépôt: 03292832.7
(22) Date de dépôt: 14.11.2003
(51) Int. Cl.: B60R 19/12

(54) **Appui bas pour chocs piéton de véhicule automobile et pare-chocs de véhicule automobile muni d'un tel appui bas**
Unterer Stossbalken für den Zusammenstoss eines Fussgängers mit einem Kraftfahrzeug und Kraftfahrzeugstossstange mit einem solchen Stossbalken
Lower protection beam for the collision of a pedestrian with a vehicle and vehicle bumper comprising such a lower protection beam

(30) Priorité: 15.11.2002 FR 0214342
(43) Date de publication de la demande: 19.05.2004
(73) Titulaire: COMPAGNIE PLASTIC OMNIUM, 69007 Lyon (FR)
(72) Inventeur: Malteste, Stéphane, 01800 Meximieux (FR)
(74) Mandataire: de la Bigne, Guillaume Michel Marie

(56) Documents cités:
- EP-A- 0 546 352
- EP-A- 1 036 715
- EP-A- 1 065 108
- FR-A- 2 410 184
- FR-A- 2 810 940
- US-A- 6 106 039
- PATENT ABSTRACTS OF JAPAN vol. 2003, no. 01, 14 janvier 2003 (2003-01-14) & JP 2002 274298 A (FUJI HEAVY IND LTD), 25 septembre 2002 (2002-09-25)

## Description

La présente invention concerne un appui bas d'un pare-chocs de véhicule automobile destiné à traiter les chocs piéton et un pare-chocs de véhicule automobile muni d'un tel appui bas.

On connaît déjà les pare-chocs, présents sur certains véhicules automobiles, du type configuré pour limiter les dommages corporels que subissent les piétons en cas d'impact, grâce à la présence d'une poutre transversale inférieure, couramment désignée appui bas, qui a pour fonction d'impacter la partie inférieure de la jambe afin de limiter l'angle formé par les deux parties de la jambe situées de part et d'autre du genou.

Cette poutre inférieure, ou appui bas, peut être fixée au système classique d'absorption d'énergie, désigné voie haute, grâce à des jambages verticaux de moyenne résistance.

Un appui bas selon le préambule de la revendication 1 est, par exemple, connu du document US-A-6 106 039.

Dans d'autres configurations, l'appui bas est directement intégré au bouclier du pare-chocs, bouclier qui est à cet effet légèrement renforcé.

Mais ces modes de fixation ne sont possibles que grâce au fait que la fonction de l'appui bas se limite à empêcher la partie inférieure de la jambe de s'engager sous le véhicule.

Jusqu'à présent, il n'était pas envisageable de faire jouer à l'appui bas un rôle d'absorption d'énergie en cas de choc à 15 km/h. Pour de tels chocs, également désignés « chocs Danner » ou « chocs assurance », le niveau d'effort à supporter est d'environ 3 tonnes, alors qu'il est compris entre 0,5 et 1 tonne pour les chocs piéton. On pouvait donc légitimement craindre que renforcer l'appui bas pour des chocs Danner le priverait de toute efficacité d'amortissement de chocs pour les piétons.

Dans les configurations connues, l'intégralité de l'énergie d'un choc Danner est donc absorbée par le système classique d'absorption d'énergie, système qui est généralement constitué par une poutre de chocs et ses absorbeurs locaux.

Pourtant, il existe un besoin pour des systèmes d'absorption d'énergie qui, tout en présentant un encombrement minimal, essentiellement dans un but esthétique, (non seulement verticalement mais également dans l'axe du véhicule afin de réduire le porte-à-faux avant), ainsi qu'un poids limité, permettent de satisfaire des cahiers de charges de plus en plus exigeants quant aux possibilités de réparation du véhicule.

On rappelle que le principe de fonctionnement d'un système d'absorption d'énergie de chocs est de se déformer tout en résistant à cette déformation. La consommation d'énergie résulte de la fourniture de l'effort nécessaire à vaincre cette résistance. L'énergie consommée est théoriquement l'intégrale du produit de l'effort instantané par la déformation élémentaire du système, sur toute sa course de déformation. Globalement, il en résulte que pour accroître la quantité d'énergie consommée, on peut soit augmenter la course de déformation, soit élever la résistance, c'est-à-dire l'effort instantané, soit accroître les deux à la fois.

Mais comme cela a déjà été indiqué, la tendance actuelle est de réduire le porte-à-faux avant du véhicule, ce qui limite les possibilités d'augmentation de la course de déformation.

On cherche donc à optimiser les systèmes d'absorption en rendant maximal l'effort résistant nécessaire à la déformation.

Toutefois, on comprend les dommages causés aux personnes et aux véhicules en cas de choc sont d'autant plus importants que la résistance du système d'absorption est élevée. L'effort nécessaire à la déformation ne doit donc pas dépasser une certaine limite.

En résumé, on attend d'un système d'absorption d'énergie que, pendant un choc, il offre le plus tôt possible une résistance amenant l'effort nécessaire à sa déformation à une valeur voisine d'une valeur limite supérieure et qu'il maintienne cette résistance le plus longtemps possible.

On désigne couramment cette valeur limite par l'expression de « plateau », en référence à la représentation graphique de l'effort en fonction de la course de déformation.

Les inventeurs à la base de la présente invention ont imaginé, à l'encontre des idées reçues, que l'énergie d'un choc, quel qu'il soit, pouvait être répartie entre la voie haute traditionnelle et l'appui bas qui est généralement réservé au choc piéton, et proposent une solution d'appui bas apte, à lui seul, à traiter des chocs piéton et au moins une partie des chocs assurance.

La présente invention a donc pour objet un appui bas d'un pare-chocs de véhicule automobile selon la revendication 1.

Selon l'invention, l'absorbeur local à deux plateaux se fixe à un support rigide apte à supporter les efforts résultant d'un choc du type « choc assurance ».

Grâce à l'invention, non seulement on améliore les capacités d'absorption d'énergie du pare-chocs du véhicule, mais en outre on peut alléger la structure de la voie haute, du fait qu'une partie de l'énergie est absorbée par l'appui bas.

En outre, on peut réduire le porte-à-faux du véhicule grâce à la répartition de l'énergie entre la voie haute et l'appui bas pour les chocs assurance, par cumul de leurs résistances.

L'invention a également pour objet un pare-chocs de véhicule automobile comprenant une voie haute d'absorption d'énergie, le pare-chocs étant caractérisé en ce qu'il comporte, en combinaison avec la voie haute d'absorption d'énergie, un appui bas muni d'au moins un absorbeur local tel que décrit ci-dessus.

Dans un mode de réalisation particulier de l'invention, le premier plateau d'effort se situe en dessous de 1 tonne, de préférence entre 300 kg et 600 kg, et le second plateau au dessus de 1 tonne, de préférence autour de 3 tonnes.

Dans un mode de réalisation particulier de l'invention, l'appui bas est une poutre transversale munie, à chacune de ses extrémités, d'un absorbeur local apte à être fixé à la structure rigide du véhicule.

Dans une variante avantageuse de ce mode de réalisation, la partie longitudinale de la poutre transversale est en aluminium ou comporte un tissu de renfort comme celui commercialisé sous le nom de Twintex® (marque de la société Vetrotex) ou encore est réalisée en composite.

De manière avantageuse, la partie longitudinale de la poutre transversale comporte des nervures à démoulage vertical (lorsque l'appui bas est orienté dans sa position d'utilisation sur le véhicule) qui présentent l'intérêt d'avoir un comportement favorable au traitement des chocs piéton.

Dans une autre variante, compatible avec la précédente, les absorbeurs locaux d'extrémités comportent des nervures à section à démoulage horizontal (lorsque l'appui bas est orienté dans sa position d'utilisation sur le véhicule), par exemple sous forme de nids d'abeilles, qui sont favorables à une bonne absorption de l'énergie en compression.

Selon une version particulièrement avantageuse de cette variante, dans une partie située du côté de la partie longitudinale de la poutre transversale, l'absorbeur local comporte des nervures à démoulage vertical, ce qui facilite la réalisation par moulage d'un seul tenant de l'appui bas, du fait que son démoulage ne requiert alors qu'un mouvement unique d'ouverture du côté de cette partie transversale.

En réalisant ainsi un appui bas par moulage d'un seul tenant présentant de telles nervures, on combine les comportements favorables à la fois aux chocs piéton et aux chocs assurance.

Les performances d'un tel appui bas sont adaptées aussi bien aux chocs Danner qu'aux chocs piéton. On parle alors d'un appui bas monobloc compatible.

Les absorbeurs locaux peuvent présenter d'autres formes adaptées à l'absorption d'énergie en compression, par exemple des formes ovoïdes.

Dans un autre mode de réalisation, la structure rigide du véhicule accueillant la fixation de l'appui bas est une partie du berceau moteur, renforcé à cet effet.

Dans un autre mode de réalisation, on relie la partie longitudinale de l'appui bas à un convergent sous moteur (également désigné ski sous moteur) de manière à profiter de ce dernier pour renforcer la tenue aux chocs de l'appui bas, et ce dans la mesure souhaitée compte tenu du traitement des chocs piéton.

Afin de faciliter la compréhension de l'invention, on va en décrire maintenant des exemples de réalisation, lesquels ne présentent aucun caractère limitatif de la portée de l'invention, en référence au dessin annexé dans lequel :
- la figure 1 est une vue en perspective de l'avant d'un véhicule automobile,
- la figure 2 est une vue de côté de la figure 1,
- la figure 3 est une vue rapprochée de la figure 2 après un choc,
- la figure 4 est une vue en perspective d'une extrémité de l'appui bas,
- la figure 5 est une vue analogue à la figure 2 montrant une variante de réalisation.

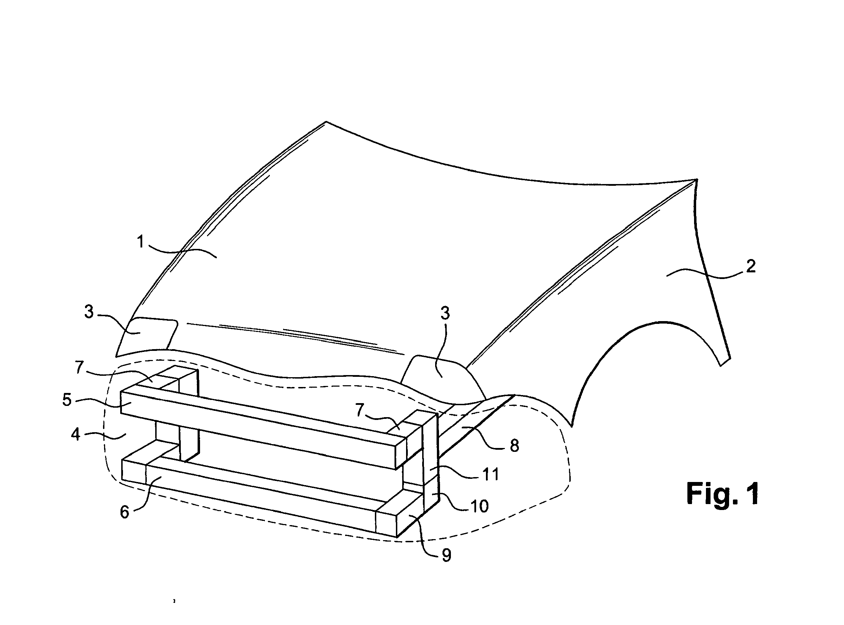

Le véhicule représenté sur la figure 1 comprend un capot moteur 1, une aile 2, des optiques 3 et un bouclier de pare-chocs 4, qui est ici représenté transparent afin de laisser voir les voies haute et basse d'absorption d'énergie comprenant respectivement une poutre de chocs 5 et un appui bas 6.

La poutre de chocs 5 est une traverse renforcée qui est fixée au voisinage de chacune de ses extrémités, sur un absorbeur local 7 lui-même monté sur un longeron 8 du véhicule par l'intermédiaire d'un jambage 11 se prolongeant vers le bas jusqu'à une platine de fixation 10.

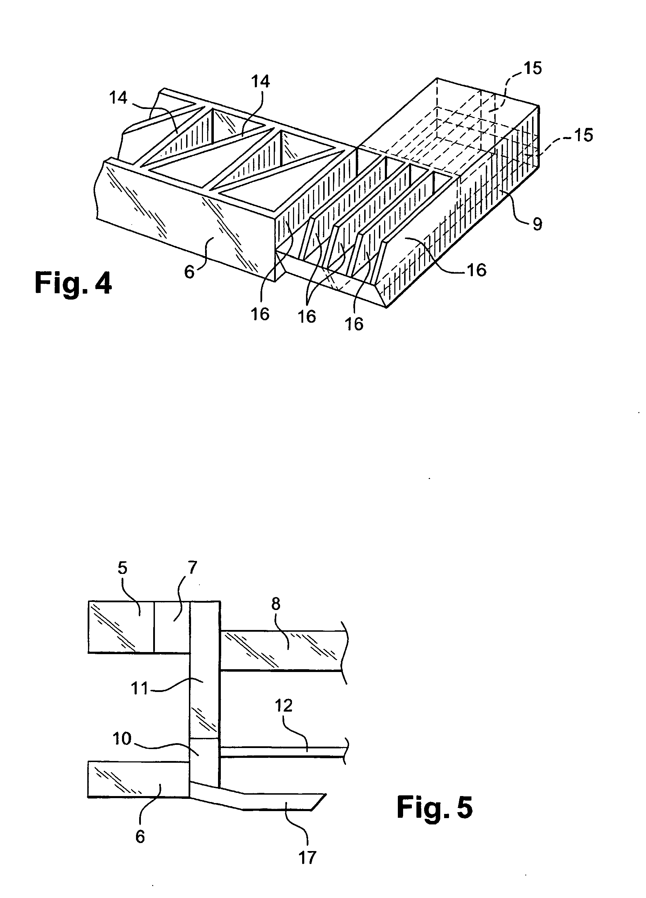

L'appui bas 6 est une traverse sensiblement parallèle à la poutre de chocs 5. La partie longitudinale de la traverse comporte, comme on le voit en figure 4, des nervures 14 à démoulage vertical qui lui confèrent une certaine rigidité adaptée à l'amortissement des chocs piéton à 4 km/h. Chaque extrémité de la traverse est également montée sur un absorbeur local 9, par exemple à structure en nid d'abeilles à démoulage horizontal, qui est assujetti à la platine de fixation 10. Des nervures 15 de la structure en nid d'abeilles permettent aux absorbeurs locaux 9 de contribuer à l'absorption de l'énergie des chocs assurance.

La figure 4 permet de voir que l'absorbeur local 9 comporte deux types de nervures, à savoir d'une part celles 15 constituant le nid d'abeilles, qui sont à démoulage horizontal par ouverture par l'arrière de l'appui bas, et d'autre part celles 16 situées à l'avant de l'appui bas, du même côté que la partie longitudinale de la traverse comportant les nervures 14.

Ces nervures 16 permettent le démoulage par ouverture vers le haut de l'avant de l'absorbeur local 9 en même temps que le démoulage de la partie longitudinale de l'appui bas.

En outre, on voit que les nervures 16 sont plus fines que les nervures 15 du nid d'abeilles. Les nervures 16 servent au traitement des chocs piéton en fournissant un premier plateau d'effort aux environs de 400 kg, tandis que les nervures 15 du nid d'abeille offrent un plateau d'effort d'environ 3 tonnes.

Revenant à la figure 1, la platine de fixation 10 constitue un support rigide pour l'appui bas en cas de choc contre un obstacle. De plus, elle assure le positionnement de cet appui bas par rapport à la poutre de chocs.

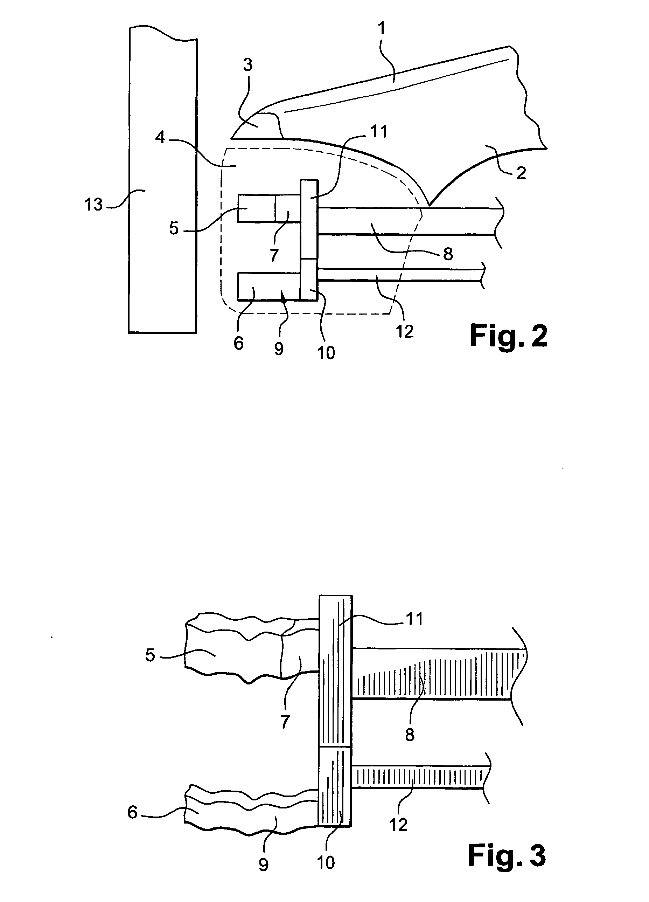

A cet effet, chaque platine 10 est reliée au longeron 8 correspondant du véhicule par le jambage vertical 11 qui lui impose un positionnement vertical et longitudinal relativement au longeron, ce qui assure en particulier l'alignement vertical de l'appui bas 6 par rapport à la poutre de chocs 5, comme on le voit sur la figure 2.

En outre, la platine de fixation 10 est directement en appui contre le berceau moteur 12 (visible sur les figures 2 et 3) qui est lui-même renforcé pour fournir l'appui rigide nécessaire au traitement des chocs assurance.

En cas de chocs avec un impacteur 13 en forme de mur (figure 2), les voies haute et basse du système d'absorption d'énergie entrent en jeu, comme on le voit à la figure 3, de sorte que la poutre 5 et la traverse 6, ainsi que leurs absorbeurs locaux 7, 9 se déforment, sans que la structure du véhicule 8, 12 ne soit entamée.

L'homme du métier saura dimensionner les poutres et les traverses ainsi que leurs absorbeurs locaux de manière et ce que la contribution des voies haute et basse soit optimale.

Dans la variante illustrée par la figure 5, un convergent (ou ski) sous moteur 17, ayant la fonction traditionnelle d'empêcher le retour d'air et de poussières sous le moteur pendant le roulement, est lié à la partie longitudinale de l'appui bas et sert à renforcer ce dernier.

Il est bien entendu que les exemples décrits ci-dessus ne présentent aucun caractère limitatif et qu'ils pourraient recevoir des modifications, pour autant que celles-ci ne sortent pas du cadre de l'invention qui est défini par les revendications annexées.

## Revendications

1. Appui bas d'un pare-chocs (4) de véhicule automobile, ledit appui bas étant destiné à traiter les chocs piéton en impactant la partie inférieure de la jambe du piéton afin de limiter l'angle formé par les deux parties de la jambe situées de part et d'autre du genou, **caractérisé en qu'**il intègre au moins un absorbeur local (9) apte à être fixé à la structure rigide (12) du véhicule et agencé de manière à opposer, en cas de déformation, une résistance engendrant un effort dont la valeur suit au moins deux plateaux, à savoir un premier plateau pour des chocs piéton se situant en dessous de 1000kg, de préférence entre 300 kg et 600 kg et un second plateau pour des chocs assurance se situant au dessus de 1000kg , de préférence autour de 3 tonnes.

2. Appui bas selon la revendication 1 , constitué par une poutre transversale (6) munie, à chacune de ses extrémités, d'un absorbeur local (9) apte à être fixé à la structure rigide (12) du véhicule.

3. Appui bas selon la revendication 2, dans lequel la partie longitudinale de la poutre transversale (6) est en aluminium ou comporte un tissu de renfort ou encore est réalisée en composite.

4. Appui bas selon la revendication 2 ou 3, dans lequel la partie longitudinale de la poutre transversale (6) comporte des nervures (14) à démoulage vertical, lorsque l'appui bas est orienté dans sa position d'utilisation sur le véhicule.

5. Appui bas selon l'une quelconque des revendications 2 à 4, dans lequel les absorbeurs locaux (9) d'extrémités comportent des nervures (15) à section à démoulage horizontal, lorsque l'appui bas est orienté dans sa position d'utilisation sur le véhicule.

6. Appui bas selon la revendication 5, dans lequel, dans une partie située du côté de la partie longitudinale de la poutre transversale (6), l'absorbeur local (9) comporte des nervures (16) à démoulage vertical, lorsque l'appui bas est orienté dans sa position d'utilisation sur le véhicule.

7. Appui bas selon l'une quelconque des revendications 1 à 6, dans lequel la structure rigide du véhicule accueillant la fixation de l'appui bas est une partie du berceau moteur (12), renforcé à cet effet.

8. Appui bas selon l'une quelconque des revendications 1 à 7, dans lequel la partie longitudinale de l'appui bas est reliée à un convergent sous moteur (17), également désigné ski sous moteur.

9. Appui bas selon l'une quelconque des revendications 1 à 8, réalisé d'un seul tenant par moulage.

10. Pare-chocs (4) de véhicule automobile comprenant une voie haute (5,7) d'absorption d'énergie, **caractérisé en ce qu'**il comporte, en combinaison avec la voie haute (5,7) d'absorption d'énergie, un appui bas (6,9) selon l'une quelconque des revendications 1 à 9.

## Claims

1. A bottom support of a motor vehicle bumper (4), said bottom support being designed to handle pedestrian impacts by impacting against the bottom portion of a pedestrian's leg in order to limit the angle formed by the two portions of the leg situated above and below the knee, the bottom support being **characterized in that** it incorporates at least one local absorber (9) suitable for being fastened to the rigid structure (12) of the vehicle and arranged in such a manner that, in the event of deformation, it opposes resistance generating a force of value that follows at least two levels, a first level for pedestrian impacts lying below 1000 kg, and lying preferably in the range 300 kg to 600 kg, and a second level for insurance impacts lying above 1000 kg, and preferably around 3 tonnes.

2. A bottom support according to claim 1, constituted by a transverse beam (6) provided at each of its ends with a local absorber (9) suitable for being fastened to the rigid structure (12) of the vehicle.

3. A bottom support according to claim 2, wherein the longitudinal portion of the transverse beam (6) is made of aluminum or includes a reinforcing fabric or else is made of composite material.

4. A bottom support according to claim 2 or claim 3, wherein the longitudinal portion of the transverse beam (6) includes unmolding ribs (14) that are vertical when the bottom support is oriented in its utilization position on the vehicle.

5. A bottom support according to any one of claims 2 to 4, wherein the end local absorbers (9) include unmolding section ribs (15) that are horizontal when the bottom support is oriented in its utilization position on the vehicle.

6. A bottom support according to claim 5, wherein, in a portion situated beside the longitudinal portion of the transverse beam (6), the local absorber (9) include unmolding ribs (16) that are vertical when the bottom support is oriented in its utilization position on the vehicle.

7. A bottom support according to any one of claims 1 to 6, wherein the rigid structure of the vehicle receiving the bottom support fastening is a portion of the engine cradle (12) that is reinforced for this purpose.

8. A bottom support according to any one of claims 1 to 7, wherein the longitudinal portion of the bottom support is connected to an under-engine spoiler (17), also referred to as an under-engine ski.

9. A bottom support according to any one of claims 1 to 8, made as a single molding.

10. A motor vehicle bumper (4) including a high energy-absorber portion (5, 7), the bumper being **characterized in that** it includes, in combination with the high energy-absorber portion (5, 7), a bottom support (6, 9) according to any one of claims 1 to 9.

## Patentansprüche

1. Untere Stütze eines Stoßfängers eines Kraftfahrzeugs, wobei die untere Stütze zum Aufnehmen des Aufpralls von Fußgängern bestimmt ist, wobei die untere Stütze auf den unteren Abschnitt des Beins des Fußgängers einwirkt, um den zwischen den auf beiden Seiten des Knies angeordneten Abschnitten des Beins gebildeten Winkel zu beschränken, **dadurch gekennzeichnet, dass** sie wenigstens einen lokalen Dämpfer (9) aufweist, der an der starren Struktur (12) des Fahrzeugs befestigt und so angeordnet werden kann, dass er bei einer Verformung einem Widerstand entgegenwirken kann, der eine Kraft erzeugt, deren Wert wenigstens zwei Niveaus entspricht, das heißt einem ersten Niveau für einen Aufprall von Fußgängern unterhalb von 1000 kg, vorzugsweise zwischen 300 kg und 600 kg, und einem zweiten Niveau für einen Aufprall zur Sicherheit oberhalb von 1000 kg, vorzugsweise von etwa 3 Tonnen.

2. Untere Stütze nach Anspruch 1, bestehend aus einem Querträger (6), ausgestattet an beiden Enden mit einem lokalen Dämpfer (9), geeignet zum Befestigen an der starren Struktur (12) des Fahrzeugs.

3. Untere Stütze nach Anspruch 2, bei welcher der längliche Teil des Querträgers (6) aus Aluminium besteht oder ein Verstärkungsgewebe umfasst oder in Verbundmaterial ausgeführt ist.

4. Untere Stütze nach Anspruch 2 oder 3, bei welcher der längliche Teil des Querträgers (6) Rippen (14) zur senkrechten Verformung umfasst, wenn die untere Stütze in Gebrauchsstellung am Fahrzeug ausgerichtet ist.

5. Untere Stütze nach einem der Ansprüche 2 bis 4, bei welcher die lokalen Dämpfer (9) der Enden Rippen (15) mit einem Abschnitt zur waagrechten Verformung umfasst, wenn die untere Stütze in Gebrauchsstellung am Fahrzeug ausgerichtet ist.

6. Untere Stütze nach Anspruch 5, bei welcher in einem Teil, der an der Seite des länglichen Teils des Querträgers (6) angeordnet ist, der lokale Dämpfer (9) Rippen (16) zur senkrechten Verformung umfasst, wenn die untere Stütze in Gebrauchsstellung am Fahrzeug ausgerichtet ist.

7. Untere Stütze nach einem der Ansprüche 1 bis 6, bei der die starre Struktur des Fahrzeugs zur Aufnahme der Befestigung des unteren Trägers ein Teil des zu diesem Zweck verstärkten Motorhilfsrahmens (12) ist.

8. Untere Stütze nach einem der Ansprüche 1 bis 8, bei der der längliche Teil der unteren Stütze mit einer Verjüngung unter dem Motor (17) verbunden ist, die ebenfalls als Kufe unter dem Motor bezeichnet wird.

9. Untere Stütze nach einem der Ansprüche 1 bis 8, in einem Stück durch Guss ausgeführt.

10. Stoßfänger (4) eines Kraftfahrzeugs umfassend einen oberen Weg (5, 6) der Aufnahme von Energie, **dadurch gekennzeichnet, dass** er in Kombination mit dem oberen Weg (5, 7) der Aufnahme von Energie eine untere Stütze (6, 9) nach einem der Ansprüche 1 bis 9 umfasst.
